# EUROPEAN PATENT SPECIFICATION

(11) **EP 3 927 752 B1**
(45) Date of publication and mention of the grant of the patent: **24.05.2023**
(21) Application number: 20706222.5
(22) Date of filing: 19.02.2020
(51) Int. Cl.: C08B 9/00

(54) **METHOD FOR PRODUCING A VISCOSE SOLUTION AND A VISCOSE SOLUTION PRODUCED THEREBY AND A METHOD FOR PRODUCING VISCOSE FIBER**
METODEN ZUR HERSTELLUNG VON VISKOSELÖSUNGEN, DIE SO PRODUZIERTE VISKOSELÖSUNG UND METHODEN ZUR HERSTELLUNG VON VISKOSEFASERN
PROCÉDÉ DE PRODUCTION D'UNE SOLUTION DE VISCOSE ET SOLUTION DE VISCOSE PRODUITE PAR CE PROCÉDÉ ET PROCÉDÉ DE PRODUCTION DE FIBRE DE VISCOSE

(30) Priority: 22.02.2019 WO PCT/CN2019/075843
(43) Date of publication of application: 29.12.2021
(73) Proprietor: BASF SE, 67056 Ludwigshafen am Rhein (DE)
(72) Inventor: TONG, Qing Feng, Shanghai, 200137 (CN); SZARVAS, Laszlo, Hong Kong (CN); BAUER, Frederic, 67056 Ludwigshafen (DE)
(74) Representative: BASF IP Association
(86) International application number: PCT/EP2020/054283
(87) International publication number: WO 2020/169632

(56) References cited:
- WO-A1-98/47924
- FREDERIK NILSSON ET AL: "Physical-Chemical Properties of Some Branched Alkyl Glucosides", LANGMUIR, vol. 13, no. 13, 1 October 1996 (1996-10-01), pages 3349-3354, XP55699942, US ISSN: 0743-7463, DOI: 10.1021/la960964x

## Description

### Field of the Invention

The present invention relates to a method for producing a viscose solution, a viscose solution produced thereby and a method for producing viscose fiber.

### Background

Viscose fiber is an important variety of semi-synthetic fibers and is normally produced by a viscose method. Natural cellulose comprising α-cellulose is mercerized by steeping pulp into an alkali solution to form alkali cellulose and then, after pressing, shredding and aging, reacted with carbon disulfide to form cellulose xanthate, which is then diluted with a dilute alkali solution, obtaining a viscous solution, i.e., a viscose solution. The viscose solution, after a series of prespinning treatments, is subjected to wet spinning and a series of post-treatments, obtaining viscose fiber. During spinning cellulose xanthate is changed into cellulose, thus cellulose is regenerated.

Ordinary viscose fiber has good hygroscopicity and good spinnability, and it is easy to dye, but not easy to generate static electricity. The short fibers can be purely spun or blended with other textile fibers. The fabric is soft, smooth, breathable, comfortable to wear, bright in color after dyeing, and good in color fastness. The short filament fabric is suitable for making underwear, outerwear and various decorative items. The filament fabric is light and thin and can be woven into quilts and decorative fabrics besides as clothing.

Surfactant plays a very important role in the production of viscose fiber. The presence of surfactant in the step of mercerizing can accelerate wetting of cellulose with alkali solution, increase the swelling degree of cellulose materials, render the alkali solution with low foaming, promote removal of hemicelluloses, and increase the reactivity of cellulose materials in both mercerization and subsequent xanthation. The presence of surfactant in alkali cellulose, in particular during shredding, affects not only the properties of the obtained product but also the shredding itself by facilitating mechanical breakdown of alkali cellulose, which is indicated as a decrease of the energy required for shredding and a reduction in the duration of this cycle.

It remains a challenge to provide a good surfactant which can be used in the production of viscose fiber. On the one hand, the surfactant is used in a very harsh application environment where it coexsits with a solution with a high NaOH concentration; on the other hand, the requirements of performance for the surfactant are high: very low foaming, alkali-resistant and capable of improving wetting and swelling degree of cellulose materials in a short time.

Nonionic and cationic surfactants are often chosen as surfactant in a method for producing viscose fiber. For instance, U.S. Patent 6,068,689 disclosed the ethoxylated surfactants derived from alcohols, phenols or diols as nonionic surfactant, and ethoxylated mono- or dialiphatic amines as cationic surfactant, for the production of a viscose solution. This patent also disclosed that said surfactants could lead to higher purity, lower viscosity, better filterability, and thereby better spinnability. Jesper Andreasson and Viktor Sundberg in their bachelor thesis ("The influence of reactivity additives upon swelling and accessibility of further reaction of cellulose", Chalmers University of Technology, Sweden, 2017) tested different chemicals for optimizing the EO distribution and found surfactants with a narrow EO range could have better performances.

Currently, phenol ethoxylate is widely and predominantly used as surfactant in the industry of viscose fiber. However, it is found this surfactant has a low solubility under alkaline conditions during mercerization of cellulose pulp, and leads to low wetting of cellulose pulp with the alkali solution and low reactivity of alkali cellulose with CS₂ during xanthation.

Thus, there is still a need for a method for producing a viscose solution without encountering the problems of low wetting and swelling degree of cellulose during mercerization and poor reactivity of alkali cellulose with CS₂ during xanthation. There is still a further need for providing a viscose solution which leads to viscose fiber with much less agglomerates and/or lumps.

### Summary of the Invention

It was found that the above objects can be achieved by a method for producing a viscose solution comprising a step of adding alkyl polyglycoside (APG for short hereinbelow) prior to and/or during xanthation of alkali cellulose.

Accordingly, the present invention provides a method for producing a viscose solution comprising a step of adding alkyl polyglycoside prior to and/or during xanthation of alkali cellulose, a viscose solution obtainable by the foresaid method, and a method for producing viscose fiber, with the foresaid viscose solution or including the foresaid method.

The alkyl polyglycoside is represented by the formula (I):

R-O-(G¹)ₓ-H (I)

in which
- R is a branched alkyl having from 3 to 20 carbon atoms, preferably from 5 to 18 carbons, more preferably from 8 to 13 carbon atoms;
- G¹ is a radical resulting from removing a H₂O molecule of a monosaccharide referred to as "reducing sugar", typically a hexose of formula C₆H₁₂O₆ or a pentose of formula C₅H₁₀O₅; and
- x represents an average value and is a number within the range of from 1.1 to 10, preferably from 1.1 to 4, more preferably from 1.1 to 2, particularly preferably from 1.15 to 1.9, and more particularly preferably from 1.2 to 1.5.

In a preferred embodiment, the alkyl polyglycoside is represented by the formula (1-1) 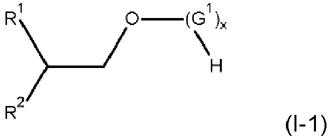 in which
- R¹ is a linear or branched C₁-C₄-alkyl group or hydrogen;
- R² is a linear or branched C₁-C₆-alkyl group or hydrogen;
- G¹ is defined as in the formula (I); and
- x is defined as in the formula (I)
- preferably R¹ and R² are not simultaneously hydrogen, and when one of R¹ and R² is hydrogen, the other of R¹ and R² is a branched alkyl group.

### Brief Description of Drawings

Figure 1 shows the microscopic picture of the viscose solution prepared in Example 3 without surfactant.
Figure 2 shows the microscopic picture of the viscose solution prepared in Example 3 with phenol ethoxylate as surfactant.
Figure 3 shows the microscopic picture of the viscose solution prepared in Example 3 with 2-propylheptyl APG as surfactant.

### Detailed Description of the Invention

In one aspect of the present invention, it provides a method for producing a viscose solution comprising a step of adding alkyl polyglycoside prior to and/or during xanthation of alkali cellulose.

The preparation of a viscose solution usually starts from pulp. Pulp is produced starting from such plant materials as wood, weed, and the like. Normally, plant materials are subjected to a series of treatments so as to separate cellulose from said plant materials, obtaining dissolved pulp. Such treatments include pre-hydrolysis, digesting, fine drifting, fine bleaching, chlorination and base treatment, bleaching, acid treatment, and the like. For the convenience of storage and transportation, dissolved pulp usually needs to be dried to form pulp board.

Pulp, which is normally in the form of pulp board, is subjected to steeping in an alkali solution, pressing and shredding to obtain alkali cellulose. The steeping of pulp in an alkali solution is also called mercerization. During said mercerization cellulose is converted into alkali cellulose, hemi-cellulose is dissolved and the polymerization degree of cellulose is partially decreased. Said pressing is to remove redundant alkali solution, obtaining alkali cellulose in the form of blocks. Said shredding is to change the alkali cellulose blocks into loosen flocs by shattering so as to increase surface area, which is beneficial to the subsequent xanthation. The alkali cellulose thus obtained has a comparatively high average polymerization degree and needs to be decreased. Then the alkali cellulose resulting from shredding is subjected to aging prior to xanthation. During said aging the alkali cellulose undergoes oxidative cleavage so that the average polymerization degree of cellulose is decreased. Following ageing, alkali cellulose is subjected to xanthation. Xanthation is an indispensable procedure for producing viscose fiber, wherein alkali cellulose with a suitable average polymerization degree is reacted with CS₂ to form cellulose xanthate, which, after being dissolved in a dilute alkali solution, results in a viscose solution. In order to make the viscose solution suitable for spinning into cellulose fiber, said viscose solution needs to be ripened, deaerated and filtered, obtaining spinning liquid.

The inventors found that when APG is added prior to and/or during xanthation of alkali cellulose, the reactivity between alkali cellulose and CS₂ could be increased and the xanthation could be accelerated, as a result of which formation of agglomerates and/or lumps in the obtained viscose solution and then the obtained viscose fiber spun therefrom is significantly reduced, relative to the situation when such conventional surfactants as phenyl ethoxylate are added likewise.

APG used according to the present invention is a type of nonionic surfactant with comprehensive properties, which combines the characteristics of common nonionic and anionic surfactants. APG is generally soluble in water, and is more soluble in common organic solvents. APG is completely biodegradable in nature and does not form metabolites that are difficult to biodegrade, thus avoiding new pollution to the environment.

Within the context of the present invention, alkyl polyglycoside may be represented by the formula (I)

R-O-(G¹)ₓ-H (I)

in which
- R is a branched alkyl having from 3 to 20 carbon atoms, preferably from 5 to 18 carbons, more preferably from 8 to 13 carbon atoms;
- G¹ is a radical resulting from removing a H₂O molecule of a monosaccharide referred to as "reducing sugar", typically a hexose of formula C₆H₁₂O₆ or a pentose of formula C₅H₁₀O₅; and
- x represents an average value and is a number within the range of from 1.1 to 10, preferably from 1.1 to 4, more preferably from 1.1 to 2, particularly preferably from 1.15 to 1.9, and more particularly preferably from 1.2 to 1.5.

As an example of R in the alkyl polyglycoside of the formula (I), it can be 2-ethylhexyl, 2-propylheptyl, 2-butyloctyl, isononyl, isotrideyl, or 5-methyl-2-isopropyl-hexyl. As an example of the reducing sugar resulting in G¹ in the alkyl polyglycoside of the formula (I), it can be at least one selected from the group consisting of rhamnose, glucose, xylose and arabinose. It is preferred that R is 2-ethylhexyl, 2-propylheptyl, 2-butyloctyl, isononyl, isotrideyl, or 5-methyl-2-isopropyl-hexyl and G¹ is a radical resulting from removing a H₂O molecule of rhamnose, glucose, xylose, arabinose or any mixtures thereof, in the alkyl polyglycoside of the formula (I).

In some preferred embodiments of the present invention, the alkyl polyglycoside may be represented by the formula (I-1) 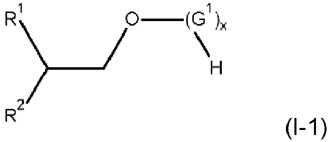 in which
- R¹ is a linear or branched C₁-C₄-alkyl group or hydrogen;
- R² is a linear or branched C₁-C₆-alkyl group or hydrogen;
- G¹ is defined as in the formula (I); and
- x is defined as in the formula (I)
- preferably R¹ and R² are not simultaneously hydrogen, and when one of R¹ and R² is hydrogen, the other of R¹ and R² is a branched alkyl group.

In the formula (I-1), R¹ is a linear or branched C₁-C₄ alkyl group or hydrogen, for example methyl, ethyl, n-propyl, isopropyl, n-butyl, isobutyl, or sec.-butyl; preferably R¹ is linear C₁-C₄ alkyl group; even more preferably R¹ is selected from ethyl and n-propyl.

Preferably, in the formula (I-1), R² is -CH₂CH₂-R³, wherein R³ is a linear or branched C₁-C₄ alkyl group or hydrogen; more preferably, R³ is equal to R¹.

It is particularly preferred in the formula (I-1), the variables are defined as follows:
R¹ is a linear or branched C₁-C₄ alkyl group or hydrogen, for example methyl, ethyl, n-propyl, isopropyl, n-butyl, isobutyl, or sec.-butyl, preferably R¹ is linear C₁-C₄ alkyl group, even more preferably R¹ is selected from ethyl and n-propyl; and
R² is -CH₂CH₂-R³, wherein R³ is equal to R¹.

In both the formula (I) and the formula (I-1), G¹ represents a radical resulting from removing a H₂O molecule of a monosaccharide referred to as "reducing sugar". Within the context of the present invention, a reducing sugar refers to a sugar with reductive property, including aldoses and ketoses. Said monosaccharide referred to as reducing sugar suitable for the intended purpose are for example hexose of formula C₆H₁₂O₆ and pentose of formula C₅H₁₀O₅, such as glucose, mannose, galactose, arabinose, xylose, ribose and the like. Also, higher sugars or substituted saccharides which can be hydrolyzed yielding monosaccharides can be used: among these starch, maltose, saccharose, lactose, maltotriose, methyl-, ethyl-, or butyl-glucosides, and so forth.

In some preferred embodiments, in the formula (I) and the formula (I-1), each G¹ is glucose or xylose, wherein in the range of from 50 to 95 mole-% of G¹ are glucose and from 5 to 50 mole% are xylose, preferably in the range of from 70 to 95 mole-% of G¹ are glucose and from 5 to 30 mole-% are xylose. More preferably, each G¹ is glucose or xylose, wherein in the range of from 72.5 to 87.5 mole-% of G¹ are glucose and from 12.5 to 27.5 mole-% are xylose.

In single molecules of the formula (I) and formula (I-1), there may be, for example, only one G¹ moiety or up to 15 G¹ moieties per molecule. In specific molecules of the formula (I) and the formula (I-1)in which only one group G¹ is comprised, said G¹ is preferably either glucose or xylose. In specific molecules of the formula (I) and formula (1-1) in which two or more G¹ groups are comprised, those G¹ groups may all be preferably glucose or xylose or combinations of glucose and xylose.

Alkyl polyglycoside are normally mixtures of various compounds that have a different degree of polymerization of the respective saccharide. Thus x refers to average values of a respective mixture comprising single molecules of the formula (I) or the formula (I-1)having whole groups of G¹, and then is not necessarily a whole number. x may be in the range of from 1.1 to 10, preferably from 1.1 to 4, more preferably from 1.1 to 2 and particularly preferably from 1.15 to 1.9, in particular from 1.2 to 1.5. In a specific molecule only whole groups of G¹ can occur. It is preferred to determine x by High Temperature Gas Chromatography (HT-GC). In specific molecules, x may be, for example, 1 or 2.

In single molecules of formula (I) and the formula (I-1)with two or more G¹ groups with G¹ being hexoses such as glucose, the glycosidic bonds between the monosaccharide units may differ in the anomeric configuration (α-; β-) and/or in the position of the linkage, for example in 1,2-position or in 1,3-position and preferably in 1,6-position or 1,4-position.

In one embodiment of the present invention, when G¹ is a radical resulting from glucose, it may contain 0.1 to 0.5 % by weight of rhamnose, referring to the total percentage of glucose. In one embodiment of the present invention, when G¹ is a radical resulting from xylose, it may contain 0.1 to 0.5% by weight of arabinose, referring to the total percentage of xylose.

As said above, alkyl polyglycoside are normally mixtures of various compounds that have a different degree of polymerization of the respective saccharide. It is to be understood that in the formula (I) and formula (I-1), x is a number average value, preferably calculated based on the saccharide distribution determined by high temperature gas chromatography (HTGC), e.g. 400°C, in accordance with K. Hill et al., Alkyl Polyglycosides, VCH Weinheim, New York, Basel, Cambridge, Tokyo, 1997, in particular pages 28 ff., or by HPLC. In HPLC methods, the degree of polymerization may be determined by the Flory method. If the values obtained by HPLC and HTGC are different, preference is given to the values based on HTGC.

In one embodiment of the present invention, the APG surfactant may be used in a mixture comprising at least one compound of the formula (I-1)and at least one of its isomers.

Isomers preferably refer to compounds in which the sugar part is identical to G¹ in the formula (I-1) according to the invention but the alkyl group is different, thus being isomeric to - CH₂CH(R¹)(R²), preferably -CH₂CH(R¹)CH₂CH₂R³, or more preferably -CH₂CH(R¹)CH₂CH₂R¹.

In one embodiment, the APG surfactant used according to the invention comprises at least one compound of the formula (I-1)with the following definitions of the variables, which is designated as component A hereinbelow:
G¹ and x are identical with the respective variables of the respective compound of the formula (I-1)according to the invention,
R¹ is a linear or branched C₁-C₄ alkyl group, and
R² is -CH₂CH₂-R¹; and
at least one compound of the formula (I-1)with the following definitions of the variables, which is designated as component B hereinbelow:
   G¹ and x are identical with the respective variables of the respective compound of the formula (I-1)according to the invention,
   R¹ is selected from -(CH₂)₂CH₃ or -CH(CH₃)₂ and
   R² is selected from -(CH₂)₄CH₃, -(CH₂)₂CH(CH₃)₂, -CH₂CH(CH₃)-CH₂CH₃ and combinations thereof. Preferably, component B may also be a mixture of compounds as well.

In an embodiment according to the invention, component B is preferably comprised in the range of from 0.1 to 50 % by weight, more preferably in the range of from 0.2 to 30 % by weight and particularly preferably 1 to 10 % by weight, referring to the total APG, the balance being component A.

An example of isomers in case of alcohol (CH₃)₂CH-(CH₂)₂-CH(iso-C₃H₇)-CH₂-OH, which gives the structure -OCH₂-CH(R¹)(R²) in the formula (I-1), is CH₃-CH(CH₃)-(CH₂)₂-CH(iso-C₃H₇)-CH₂-OH.

The APG used according to the invention can be synthesized by conventional methods. In order to synthesize the compound of the formula (I), usually one or more monosaccharides referred to as "reducing sugar", for example one or more selected from glucose and xylose, or the respective di- or polysaccharides with an alcohol of formula R-OH in the presence of a catalyst, wherein R is defined as in the formula (I). In order to synthesize the compound of the formula (I-1), usually one or more monosaccharides referred to as "reducing sugar", for example one or more selected from glucose and xylose, or the respective di- or polysaccharides, with an alcohol of formula (III),

HO-CH₂-CH(R¹)(R²) (III)

wherein R¹ and R² are defined as in the formula (I-1),
preferably, with an alcohol of the formula (III-1)

   R¹CH₂-CH₂-CHR¹-CH₂-OH (III-1)
wherein R¹ is defined as in the formula (I-1),
in the presence of a catalyst.

For performing the synthesis of APGs, it is preferred to react a mixture of glucose and xylose or the respective di- or polysaccharides with an alcohol of formula (III) as defined above, especially with the alcohol of the formula (III-1), in the presence of a catalyst.

Mixtures of monosaccharides referred to as "reducing sugar", such as mixtures of glucose and xylose, or the respective di- or polysaccharides are also being hereinafter referred to as mixture of sugars. The ratio of monosaccharides referred to as "reducing sugar" in the compound of the formula (I) or (I-1) then corresponds to the ratio of monosaccharides referred to as "reducing sugar" in mixture of sugars. For example, when the monosaccharides referred to as "reducing sugar" are glucose and xylose, the ratio of glucose and xylose in the compound of the formula (I) or (I-1) then corresponds to the ratio of glucose and xylose in mixture of sugars.

In one embodiment of the present invention, the synthesis of APGs is carried out using a corresponding mixture of sugars of monosaccharides, disaccharides or polysaccharides as starting material. For example, glucose may be chosen from crystalline glucose, glucose syrup or mixtures from glucose syrup with starch or cellulose. Polymeric and even dimeric glucose usually requires depolymerization before conversion with the alcohol R-OH. It is preferred, though, to use a monosaccharide of glucose as one of the starting materials, water-free or as hydrate, for example as monohydrate. Starting material for the generation of xylose can be, for example, wood or hemicellulose.

In another embodiment of the present invention, mixture of saccharides is selected from sugars of biomass conversion processes, for example of biorefinery processes, in which feedstock like wood, bagasse, straw, switchgrass or others are converted by hydrolytic cleavage (depolymerization) to monosaccharides such as glucose, xylose, arabinose, galactose or mixtures of the preceding sugars.

In one embodiment of the synthesis of APGs, the alcohol R-OH and total saccharide are selected in a molar ratio in the range of from 1.5 to 10 mol alcohol per mol monosaccharide, preferred 2.3 to 6 mol alcohol per mol monosaccharide, the moles of monosaccharide, disaccharide or polysaccharide being calculated on the base of the respective G¹ groups.

Catalysts can be selected from acidic catalysts. Preferred acidic catalysts are selected from strong mineral acids, in particular sulfuric acid, or organic acids such as sulfosuccinic acid or sulfonic acids, such as para-toluene sulfonic acid. Other examples of acidic catalysts are acidic ion exchange resins. Preferably, an amount in the range of from 0.0005 to 0.02 mol catalyst is used per mole of sugar.

In one embodiment, the synthesis of APGs is performed at a temperature in the range of from 90 to 125°C, preferably from 92 to 110°C.

In one embodiment of the present invention, the synthesis of APGs is carried over a period of time in the range of from 2 to 15 hours.

During performing the synthesis of APGs, it is preferred to remove the water formed during the reaction, for example by distilling off water. In one embodiment of the present invention, water formed during the synthesis of APGs is removed with the help of a Dean-Stark trap. This latter embodiment is particularly preferred in embodiments where the alcohol ROH and water form a low-boiling azeotropic mixture.

In one embodiment of the present invention, the synthesis of APGs is carried out at a pressure in the range of 20 mbar up to normal pressure.

In another embodiment, at the end of the synthesis, unreacted alcohol R-OH will be removed, e.g., by distilling it off. Such removal can be started after neutralization of the acidic catalyst with, e. g., a base such as sodium hydroxide or MgO. The temperature for distilling off the excess alcohol is selected in accordance with the alcohol R-OH. In many cases, a temperature in the range of from 140 to 215°C is selected, and a pressure in the range of from 1 mbar to 500 mbar is selected.

In one embodiment, the process for the synthesis of APGs additionally comprises one or more purification steps. Possible purification steps can be selected from bleaching, e.g., with a peroxide such as hydrogen peroxide, filtering over adsorbent such as silica gel, and treatment with charcoal.

For the purpose of the present invention, APG needs to be added prior to and/or during xanthation. It was found adding APG at either of said timings could increase the reactivity between alkali cellulose and CS₂ and accelerate the xanthation, as a result of which formation of agglomerates and/or lumps in the obtained viscose solution and then the obtained viscose fiber spun therefrom are significantly reduced, relative to the situation when such conventional surfactants as phenyl ethoxylate are added likewise. In addition, the significant reduction of lumps in the viscose solution would improve spinnability due to much less blocking of spinneret, and the significant reduction of lumps in the viscose fiber would improve processability of fiber when it is woven into fabrics.

Within the context of the present invention, APG is added prior to and/or during xanthation of alkali cellulose. That is, APG is added at any time no later than the occurrence of xanthation reaction, as long as the xanthation reaction is carried out in the presence of the APG. For example, APG may be added at one or more stages selected from the group consisting of pulp production stage, mercerization stage, and xanthation stage, as long as the xanthation reaction is carried out in the presence of the APG.

Stage of pulp production normally starts from such plant materials as wood, weed, and the like till dry pulp board is obtained. When APG is added at stage of pulp production, it may be added into dissolved pulp, especially the dissolved pulp prior to drying to obtain pulp board, or sprayed onto the dried pulp board obtained by drying dissolved pulp, or both. It is found that when APG is added at this stage, APG could be detected present in the alkali cellulose resulting from mercerization and in the viscose solution resulting from xanthation. APG might be probably detected in the spinning liquid prepared from the viscose solution. The addition of APG during pulp production stage may not only increase the reactivity between alkali cellulose and CS₂ and accelerate xanthation, but also increase wetting of cellulose with alkali solution and reduce foaming of the alkali solution during mercerization.

Stage of mercerization refers to the procedure which converts pulp with alkali into alkali cellulose. When APG is added prior to or during mercerization, it may be added into pulp prior to or during occurrence of the reaction between the pulp and alkali to form alkali cellulose, or both. It is found that when APG is added at this stage, APG could be detected present in the alkali cellulose resulting from mercerization and in the viscose solution resulting from xanthation. APG might be probably detected in the spinning liquid prepared from the viscose solution. In this case, it is found APG has a good solubility in the alkali solution and can accelerate wetting of pulp with the alkali solution and reduce foaming of the alkali solution during mercerization. Thus, APG can promote penetration of the alkali solution into inside of pulp and then accelerate the reaction between cellulose and alkali to form alkali cellulose. In addition, and importantly, the addition of APG at stage of mercerization may increase the reactivity between alkali cellulose and CS₂ and accelerate xanthation.

Stage of xanthation refers to the procedure which converts alkali cellulose with CS₂ into cellulose xanthate. When APG is added prior to or during xanthation, it may be added into alkali cellulose prior to or during occurrence of the reaction between the alkali cellulose and CS₂ to form cellulose xanthate, or both. It is found that when APG is added at this stage, APG could be detected present in the viscose solution resulting from xanthation, and probably even in the spinning liquid prepared from the viscose solution. The addition of APG at stage of xanthation may increase the reactivity between alkali cellulose and CS₂ and accelerate xanthation.

Of course, APG may be added at any other time as long as it is added prior to and/or during xanthation so that the xanthation reaction is carried out in the presence of the APG. For example, APG may be sprayed onto the alkali cellulose blocks during shredding after mercerization, sprayed onto the loosen alkali cellulose flocs resulting from shredding, and/or added into the alkali cellulose flocs during aging after shredding.

As the way of adding APG, it may be mixed into liquid materials, for example poured into dissolved pulp, or sprayed onto solid materials, for example sprayed onto dry pulp board.

In a preferred embodiment, APG is added at either or both of stages of mercerization and xanthation. In a more preferred embodiment, APG is added prior to or during mercerization stage.

The total amount of APG is added normally in an amount of from 200 to 5000 ppm by weight, preferably from 200 to 2000 ppm by weight, more preferably from 500 to 1800, particularly preferably from 700 to 1500 ppm by weight, based on the dry weight of pulp. It is noted that for example, when APG is added prior to or during pulp production stage, the dry weight of pulp means the dry weight of all the pulp to be produced from the present pulp production, when APG is added prior to or during mercerization stage, the dry weight of pulp means the dry weight of all the pulp used for conducting the present mercerization, and when APG is added prior to or during xanthation stage, the dry weight of pulp means the dry weight of all the pulp used for conducting the mercerization exactly preceding the present xanthation.

Besides alkyl polyglycoside as surfactant, it is also possible to add some other surfactants in the method according to the present invention. These surfactants may be those proposed in US 6,068,689, They may be nonionic or cationic surfactants having a hydrocarbon group of from 6 to 24 carbon atoms, preferably of from 6 to 14 carbon atoms. Further, it may be nonionic ethoxylate of an alcohol, phenol or diol compound, such as phenol ethoxylates. Advantageously, the surfactant may also be a cationic ethoxylated mono- or dialiphatic monoamine containing at least one aliphatic tertiary ammonium groups.

In another aspect of the present invention, it provides a viscose solution obtainable by a method for producing a viscose solution according to the present invention, which comprises alkali, α-cellulose, and may probably contain APG as surfactant. As said alkali, it normally refers to NaOH.

In a final aspect of the present invention, it provides a method for producing viscose fiber, which includes a method for producing a viscose solution according to the present invention or uses the viscose solution according to the present invention. This viscose fiber produced by this process has much less lumps, compared to the situation in which phenol ethoxylate is used as surfactant for the production of viscose solution.

The production of viscose fiber with a viscose solution is conventional. Usually, after xanthation of alkali cellulose with CS₂, the obtained cellulose xanthate is dissolved in a dilute solution of alkali to form a viscose solution, which is then subjected to ripening, filtration and defoaming. Next, the obtained viscose solution is spun and passed through a solidification bath for forming viscose fiber. After that, the formed viscose fiber is subjected to a series of post-treatments, such as washing with water, desulfurization, pickling, oiling and drying.

In the method for producing viscose fiber, it includes the method for producing a viscose solution according to the present invention, or employs the viscose solution obtainable by the method for producing a viscose solution according to the present invention as the starting material. As a result, the viscose fiber produced according to the present invention comprises much less lumps, thus greatly increasing quality of cellulose fiber and improving processability of the cellulose fiber when woven into fabrics.

The invention is further demonstrated and exemplified by the following Examples.

### Examples

Phenol ethoxylate, which is employed in the comparative examples, is available commercially from Akzo Nobel with a trade name Berol Visco 388.

The APG used in the inventive Examples was prepared by reacting the "oxoalcohol" 2-Propylheptanol, meaning that it was produced from the hydroformylation ("oxo synthesis") of C4 alkenes followed by hydrogenation of the resulting aldehyde, with a mixture of glucose and xylose according to the exact procedure for preparing Mixture (A.2) described in working examples of EP-2998331 B1. The finally obtained product corresponded to the APG of the formula (I) in which x is 1.28, and each G¹ is glucose or xylose, wherein 77.2 mole % is glucose and 22.8 mole % is xylose. This product is designated as 2-PH APG (2-propylheptyl APG).

### Example 1-Solubility Test

To 100g of a 13.6% by weight solution of NaOH in water, was added 0.3g of surfactant. The resulting mixture was stirred for 1 hour at a speed of 700 rpm at ambient temperature and then stood for 30 minutes. The resulting mixture was observed visually and the results are summarized in table 1.

**Table 1**

| Surfactant | Appearance of resulting mixture |
|---|---|
| 2-propylheptyl APG | a clear solution |
| phenol ethoxylate | Some insoluble substance occurring in the mixture |

### Example 2-Wetting Test or Penetrating Power Test

The test is carried out at room temperature (22°C±1) according to a method based on China Industry Standard HG/T 2575-94 (Surface active agents-determination of penetrating power by immersion).

A 0.3% by weight surfactant solution was prepared by dissolving a surfactant in distilled water. 800ml of the surfactant solution was placed in a 1000ml beaker. A standard cotton fabric piece, which is a circle cotton canvas with a diameter of 35mm and weight of 0.38-0.39g, was placed on the center point of the surface of the surfactant solution and at the same time a stopwatch was started. The surfactant solution will penetrate into the fabric piece gradually. Stop the stopwatch at the moment when the standard cotton fabric piece begins to sink in the surfactant solution and record the time. The measured time is referred to as penetrating time. The test for each surfactant was repeated 10 times and the mean of said 10 measurements was reported as the test result. The penetrating time of inventive and comparative examples at different temperatures was shown in Table 2. A shorter penetrating time indicates better penetrating performance or wetting.

**Table 2**

| Surfactant | Wetting time at room temperature | Wetting time at 60°C |
|---|---|---|
| 2-propylheptyl APG | 2min40s | 59s |
| phenol ethoxylate | Over 20 min | Over 20 min |

It can be seen from Table 2 that 2-PH APG has a much better wetting property in water than phenol ethoxylate at both room temperature and at a temperature of 60°C.

### Example 3-Reactivity Performance Test

Cellulose pulp is chemically reacted with a certain amount of sodium hydroxide and carbon disulfide in sequence to form cellulose xanthate. The time difference between the passage of the cellulose xanthate solution through filter hole with the same volume was measured.

14.40 g of pulp sample (absolute dry weight) was placed into a 500 ml jar equipped with an electric mixer, into which was added 361ml of an aqueous NaOH solution (13.7 wt% at 20°C). The sample was mixed and stirred at a rotation speed of 3000 r/min for 5 mins to obtain a paste-like material. 9mL CS₂ was added into the jar, which was then tightly sealed by a closure cap. The jar was placed on an oscillator and oscillated along the axis of the jar for 15 mins, then xanthation reaction was carried out in a xanthation box (DK-98-12, commercially available from Changzhou Huapuda Company Ltd.) with a rotation speed of 15 r/min for 4h.

The overall cellulose xanthate solution thus-obtained, i.e., viscose solution, was put in a clean and dry stainless-steel tube equipped with a stainless-steel mesh of 10000 holes/cm². The filtered viscose solution was collected in a graduated cylinder and the filtration times from collecting a total of from 25ml to 50ml (T1) and from 125ml to 150ml (T2) were measured respectively. The test is repeated for a plurality of times and the average value was reported as the test result. Shorter time difference (T2-T1) indicates better reactivity performance. The test results were summarized in Table 3 below.

**Table 3**

| Surfactant | Dosage by weight of surfactant relative to dry pulp | Time required for collecting from 25ml to 50ml (T1,s) | Time required for collecting from 125ml to150ml (T2,s) | T2-T1 (s) |
|---|---|---|---|---|
| 2-propylheptyl APG | 0.75‰ | 9 | 83 | 74 |
| 2-propylheptyl APG | 0.80‰ | 10 | 65 | 55 |
| Phenol Ethoxylate | | 20.5 | >250 | >229.5 |
| 2-propylheptyl APG | 1.0‰ | 9.5 | 45 | 35.5 |
| Phenol Ethoxylate | | 10 | 160 | 150 |

It can be seen from Table 3 that 2-propylheptyl APG could render improved reactivity between alkali cellulose and CS₂ than phenol ethoxylate. The higher dosages of 2-propylheptyl APG are more likely to bring about much higher reactivity between alkali cellulose and CS₂.

### Example 4-Foaming Test

1g of surfactant was mixed with 200mL of 1 wt% aqueous NaOH solution in a 1000mL measuring flask, which was then filled to the 1000ml mark with 1 wt% aqueous NaOH solution and closed with a plug. By carefully shaking the surfactant was dispersed homogeneously. The thus obtained liquid was then placed in a foam test device of the type "R-2000" commercially available from the company Sita. The test of foam generation was conducted at the following parameters:

| Foam generation |
|---|
| Agitation speed: 1500 rpm |
| Agitation duration: 60s |
| Number of agitations: 10 |
| The foam volume is measured automatically after each agitation step of 60s. |

The test results were summarized in Table 4 below.

**Table 4**

| Test | 1g 2-PH APG /L in 1 wt% NaOH | | | 1g Phenol Ethoxylate /L in 1 wt% NaOH | | |
|---|---|---|---|---|---|---|
| | 20°C | 40°C | 60°C | 20°C | 40°C | 60°C |
| **0** | 0 | 0 | 0 | 0 | 0 | 0 |
| **1** | 51 | 55 | 47 | 160 | 91 | 50 |
| **2** | 38 | 53 | 26 | 193 | 128 | 43 |
| **3** | 41 | 44 | 43 | 212 | 126 | 48 |
| **4** | 36 | 51 | 27 | 222 | 152 | 50 |
| **5** | 36 | 38 | 28 | 225 | 155 | 55 |
| **6** | 41 | 44 | 36 | 235 | 144 | 51 |
| **7** | 35 | 42 | 35 | 233 | 157 | 48 |
| **8** | 36 | 43 | 24 | 243 | 148 | 53 |
| **9** | 37 | 37 | 28 | 249 | 166 | 52 |
| 10 | 35 | 40 | 24 | 255 | 150 | 52 |

The results illustrate that 2-propylheptyl APG has a much lower foaming in an aqueous NaOH solution than Phenol Ethoxylate.

### Example 5- Microscope Test

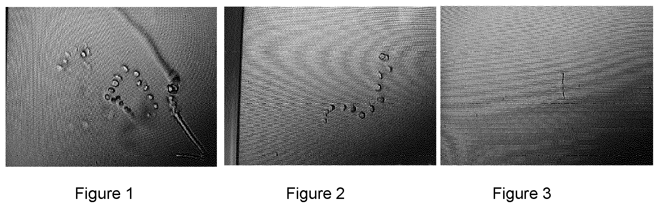

The microscopic images of the respect viscose solutions obtained in Example 3 by a digital microscope were shown in Figures 1, 2 and 3, wherein the magnitude is 200.

It can be seen from Figures 1, 2 and 3 that the use of phenol ethoxylate as surfactant leads to a viscose solution which has less agglomerates and/or lumps than the viscose solution obtained without surfactant, and the use of 2-PH APG as surfactant leads to a viscose solution with even much less agglomerates and/or lumps than the viscose solution obtained with phenol ethoxylate surfactant, under likewise conditions.

## Claims

1. A method for producing a viscose solution comprising a step of adding alkyl polyglycoside prior to and/or during xanthation of alkali cellulose, wherein the alkyl polyglycoside is represented by the formula (I):
R-O-(G¹)ₓ-H (I)
in which
- R is a branched alkyl having from 5 to 18 carbons, more preferably from 8 to 13 carbon atoms, for example 2-ethylhexyl, 2-propylheptyl, 2-butyloctyl, isononyl, isotrideyl, or 5-methyl-2-isopropyl-hexyl;
- G¹ is a radical resulting from removing a H₂O molecule of a monosaccharide referred to as "reducing sugar", typically a hexose of formula C₆H₁₂O₆ or a pentose of formula C₅H₁₀O₅; and
- x represents an average value and is a number within the range of from 1.1 to 4, preferably from 1.1 to 2, particularly preferably 1.15 to 1.9, more particularly preferably 1.2 to 1.5.

2. The method as claimed in claim 1, wherein the alkyl polyglycoside is represented by the formula (I-1): 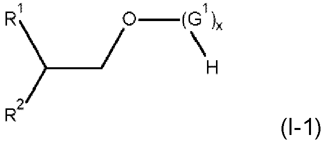 in which
- R¹ is a linear or branched C₁-C₄-alkyl group or hydrogen;
- R² is a linear or branched C₁-C₆-alkyl group or hydrogen;
- G¹ is defined as in the formula (I); and
- x is defined as in the formula (I);
- preferably R¹ and R² are not simultaneously hydrogen, and when one of R¹ and R² is hydrogen, the other of R¹ and R² is a branched alkyl group.

3. The method as claimed in claim 2, wherein R² is -CH₂CH₂-R³, wherein R³ is a linear or branched C₁-C₄ alkyl group or hydrogen; more preferably, R³ is equal to R¹.

4. The method as claimed in claim 2 or 3, wherein R¹ is methyl, ethyl, n-propyl, isopropyl, n-butyl, isobutyl, or sec.-butyl; preferably ethyl or n-propyl.

5. The method as claimed in any of claims 1 to 4, wherein the monosaccharide referred to as reducing sugar is at least one selected from the group consisting of glucose, mannose, galactose, arabinose, xylose and ribose.

6. The method as claimed in claims 1 to 5, wherein each G¹ is glucose or xylose, wherein in the range of from 50 to 95 mole-% of G¹ are glucose and from 5 to 50 mole-% are xylose, preferably in the range of from 70 to 95 mole-% of G¹ are glucose and from 5 to 30 mole-% are xylose, more preferably in the range of from 72.5 to 87.5 mole-% of G¹ are glucose and from 12.5 to 27.5 mole-% are xylose.

7. The method as claimed in any of claims 1 to 6, wherein the alkyl polyglycoside is added at one or more stages selected from the group consisting of pulp production stage, mercerization stage, and xanthation stage, preferably added at either or both of stages of mercerization and xanthation, especially at stage of mercerization, as long as the xanthation reaction is carried out in the presence of the alkyl polyglycoside.

8. The method as claimed in any of claims 1 to 7, wherein the alkyl polyglycoside is added into pulp prior to or during occurrence of the reaction between the pulp and alkali to form alkali cellulose, or both.

9. The method as claimed in any of claims 1 to 7, wherein the alkyl polyglycoside is added into alkali cellulose prior to or during occurrence of the reaction between the alkali cellulose and CS₂ to form cellulose xanthate, or both.

10. The method as claimed in any of claims 1 to 8, wherein the alkyl polyglycoside is added in a total amount of from 200 to 5000 ppm by weight, preferably from 200 to 2000 ppm by weight, more preferably from 500 to 1800, particularly preferably from 700 to 1500 ppm by weight, based on the dry weight of pulp.

11. A viscose solution obtainable by a method for producing a viscose solution as claimed in any of claims 1 to 10.

12. A method for producing viscose fiber, which includes a method for producing a viscose solution as claimed in any of claims 1 to 10 or uses a viscose solution as claimed in claim 11.

## Patentansprüche

1. Verfahren zur Herstellung einer Viskoselösung, umfassend einen Schritt des Zugebens von Alkylpolyglycosid vor und/oder während Xanthogenierung von Alkalicellulose, wobei das Alkylpolyglycosid durch die Formel (I) dargestellt wird:
R-O-(G¹)ₓ-H (I),
wobei
- R ein verzweigtes Alkyl mit von 5 bis 18 Kohlenstoffatomen, bevorzugter von 8 bis 13 Kohlenstoffatomen, ist, beispielsweise 2-Ethylhexyl, 2-Propylheptyl, 2-Butyloctyl, Isononyl, Isotridecyl oder 5-Methyl-2-isopropylhexyl;
- G¹ ein Rest ist, der durch Entfernen eines H₂O-Moleküls von einem Monosaccharid erhalten ist, bezeichnet als "reduzierender Zucker", typischerweise eine Hexose der Formel C₆H₁₂O₆ oder eine Pentose der Formel C₅H₁₀O₅; und
- x einen Mittelwert darstellt und eine Zahl in dem Bereich von 1,1 bis 4 ist, vorzugsweise von 1,1 bis 2, besonders bevorzugt 1,15 bis 1,9, noch bevorzugter 1,2 bis 1,5.

2. Verfahren gemäß Anspruch 1, wobei das Alkylpolyglycosid durch die Formel (I-1) dargestellt wird: 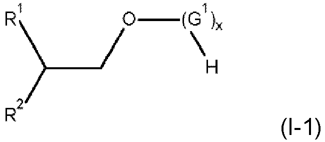 wobei
- R¹ eine lineare oder verzweigte C₁-C₄-Alkylgruppe oder Wasserstoff ist;
- R² eine lineare oder verzweigte C₁-C₆-Alkylgruppe oder Wasserstoff ist;
- G¹ wie für Formel (I) definiert ist; und
- x wie für Formel (I) definiert ist;
- vorzugsweise R¹ und R² nicht gleichzeitig Wasserstoff sind, und wenn eines von R¹ und R² Wasserstoff ist, das andere von R¹ und R² eine verzweigte Alkylgruppe ist.

3. Verfahren gemäß Anspruch 2, wobei R² -CH₂CH₂-R³ ist, wobei R³ eine lineare oder verzweigte C₁-C₄-Alkylgruppe oder Wasserstoff ist; bevorzugter R³ gleich wie R¹ ist.

4. Verfahren gemäß Anspruch 2 oder 3, wobei R¹ Methyl, Ethyl, n-Propyl, Isopropyl, n-Butyl, Isobutyl oder sec-Butyl ist; vorzugsweise Ethyl oder n-Propyl.

5. Verfahren gemäß einem der Ansprüche 1 bis 4, wobei das als reduzierender Zucker bezeichnete Monosaccharid wenigstens eines ausgewählt aus der Gruppe bestehend aus Glucose, Mannose, Galactose, Arabinose, Xylose und Ribose ist.

6. Verfahren gemäß einem der Ansprüche 1 bis 5, wobei jedes G¹ Glucose oder Xylose ist, wobei in dem Bereich von 50 bis 95 mol-% von G¹ Glucose sind und von 5 bis 50 mol-% Xylose sind, vorzugsweise in dem Bereich von 70 bis 95 mol-% von G¹ Glucose sind und von 5 bis 30 mol-% Xylose sind, bevorzugter in dem Bereich von 72,5 bis 87,5 mol-% von G¹ Glucose sind und von 12,5 bis 27,5 mol-% Xylose sind.

7. Verfahren gemäß einem der Ansprüche 1 bis 6, wobei das Alkylpolyglycosid bei einer oder mehreren Stufen ausgewählt aus der Gruppe bestehend aus Pulpeherstellungsstufe, Mercerisierungsstufe und Xanthogenierungsstufe zugegeben wird, vorzugsweise bei einer oder beiden Stufen von Mercerisierung und Xanthogenierung zugegeben wird, insbesondere bei der Stufe von Mercerisierung, solange die Xanthogenierungsreaktion in Gegenwart des Alkylpolyglycosids durchgeführt wird.

8. Verfahren gemäß einem der Ansprüche 1 bis 7, wobei das Alkylpolyglycosid vor dem oder während des Ablaufens der Reaktion zwischen der Pulpe und Alkali zum Bilden von Alkalicellulose oder beidem davon zu Pulpe zugegeben wird.

9. Verfahren gemäß einem der Ansprüche 1 bis 7, wobei das Alkylpolyglycosid vor dem oder während des Ablaufens der Reaktion zwischen der Alkalicellulose und CS₂ zum Bilden von Cellulosexanthogenat oder beidem davon zu Alkalicellulose zugegeben wird.

10. Verfahren gemäß einem der Ansprüche 1 bis 8, wobei das Alkylpolyglycosid in einer Gesamtmenge von 200 bis 5000 ppm nach Gewicht, vorzugsweise von 200 bis 2000 ppm nach Gewicht, bevorzugter von 500 bis 1800, besonders bevorzugt von 700 bis 1500 ppm nach Gewicht, bezogen auf das Trockengewicht der Pulpe, zugegeben wird.

11. Viskoselösung, erhältlich durch ein Verfahren zur Herstellung einer Viskoselösung gemäß einem der Ansprüche 1 bis 10.

12. Verfahren zur Herstellung von Viskosefaser, das ein Verfahren zur Herstellung einer Viskoselösung gemäß einem der Ansprüche 1 bis 10 einschließt oder eine Viskoselösung gemäß Anspruch 11 verwendet.

## Revendications

1. Procédé pour la production d'une solution de viscose comprenant une étape d'ajout d'un alkylpolyglycoside avant et/ou pendant la xanthation d'une cellulose alcaline, l'alkylpolyglycoside étant représenté par la formule (I) :
R-O-(G¹)ₓ-H (I)
dans laquelle
- R est un alkyle ramifié possédant de 5 à 18 carbones, plus préférablement de 8 à 13 atomes de carbone, par exemple 2-éthylhexyle, 2-propylheptyle, 2-butyloctyle, isononyle, isotridécyle, ou 5-méthyl-2-isopropyl-hexyle ;
- G¹ est un radical résultant de l'élimination d'une molécule de H₂O d'un monosaccharide appelé « sucre réducteur », généralement un hexose de formule C₆H₁₂O₆ ou un pentose de formule C₅H₁₀O₅ ; et
- x représente une valeur moyenne et est un nombre dans la plage allant de 1,1 à 4, préférablement de 1,1 à 2, particulièrement préférablement 1,15 à 1,9, plus particulièrement préférablement 1,2 à 1,5.

2. Procédé selon la revendication 1, l'alkylpolyglycoside étant représenté par la formule (I-1) : 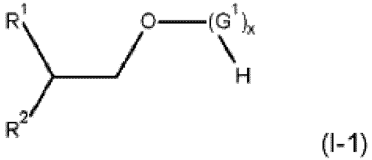 dans laquelle
- R¹ est un groupe alkyle en C₁-C₄ linéaire ou ramifié ou hydrogène ;
- R² est un groupe alkyle en C₁-C₆ linéaire ou ramifié ou hydrogène ;
- G¹ est défini comme dans la formule (I) ; et
- x est défini comme dans la formule (I) ;
- préférablement R¹ et R² ne sont pas simultanément hydrogène, et lorsque l'un parmi R¹ et R² est hydrogène, l'autre parmi R¹ et R² est un groupe alkyle ramifié.

3. Procédé selon la revendication 2, R² étant -CH₂CH₂-R³, R³ étant un groupe alkyle en C₁-C₄ linéaire ou ramifié ou hydrogène ; plus préférablement, R³ étant égal à R¹.

4. Procédé selon la revendication 2 ou 3, R¹ étant méthyle, éthyle, n-propyle, isopropyle, n-butyle, isobutyle ou sec.-butyle ; préférablement éthyle ou n-propyle.

5. Procédé selon l'une quelconque des revendications 1 à 4, le monosaccharide appelé sucre réducteur étant au moins l'un choisi dans le groupe constitué par le glucose, le mannose, le galactose, l'arabinose, le xylose et le ribose.

6. Procédé selon les revendications 1 à 5, chaque G¹ étant le glucose ou le xylose, dans la plage allant de 50 à 95 % en moles de G¹ étant du glucose et de 5 à 50 % en moles étant du xylose, préférablement dans la plage allant de 70 à 95 % en moles de G¹ étant du glucose et de 5 à 30 % en moles étant du xylose, plus préférablement dans la plage allant de 72,5 à 87,5 % en moles de G¹ étant du glucose et de 12,5 à 27,5 % en moles étant du xylose.

7. Procédé selon l'une quelconque des revendications 1 à 6, l'alkylpolyglycoside étant ajouté à un ou plusieurs stades choisis dans le groupe constitué par un stade de production de pulpe, un stade de mercerisation, et un stade de xanthation, préférablement ajouté à l'un ou l'autre ou les deux parmi des stades mercerisation et de xanthation, notamment à un stade de mercerisation, tant que la réaction de xanthation est mise en œuvre en la présence de l'alkylpolyglycoside.

8. Procédé selon l'une quelconque des revendications 1 à 7, l'alkylpolyglycoside étant ajouté dans une pulpe avant ou pendant l'occurrence de la réaction entre la pulpe et l'alcali pour former une cellulose alcaline, ou les deux.

9. Procédé selon l'une quelconque des revendications 1 à 7, l'alkylpolyglycoside étant ajouté dans une cellulose alcaline avant ou pendant l'occurrence de la réaction entre la cellulose alcaline et CS₂ pour former un xanthate de cellulose, ou les deux.

10. Procédé selon l'une quelconque des revendications 1 à 8, l'alkylpolyglycoside étant ajouté en une quantité totale allant de 200 à 5 000 ppm en poids, préférablement de 200 à 2 000 ppm en poids, plus préférablement de 500 à 1 800, particulièrement préférablement de 700 à 1 500 ppm en poids, sur la base du poids sec de la pulpe.

11. Solution de viscose pouvant être obtenue par un procédé pour la production d'une solution de viscose selon l'une quelconque des revendications 1 à 10.

12. Procédé pour la production d'une fibre de viscose, qui comprend un procédé pour la production d'une solution de viscose selon l'une quelconque des revendications 1 à 10 ou qui utilise une solution de viscose selon la revendication 11.
